# EUROPÄISCHE PATENTANMELDUNG

(11) **EP 2 204 896 A2**
(43) Veröffentlichungstag der Anmeldung: **07.07.2010**
(21) Anmeldenummer: 09180128.2
(22) Anmeldetag: 21.12.2009
(51) Int. Cl.: H02K 21/14, H02K 3/28

(54) **Bürstenloser Gleichstrommotor**

(30) Priorität: 05.01.2009 DE 102009000026
(71) Anmelder: Robert Bosch GmbH, 70442 Stuttgart (DE)
(72) Erfinder: Evans, Steven Andrew, 77815, Buehl (DE)

(57) **Zusammenfassung**

Die Erfindung betrifft einen Gleichstrommotor mit einem Rotor, welcher eine erste Magnetfelderzeugungseinrichtung zur Erzeugung eines magnetischen Multipolfeldes aufweist und einem Stator, welcher eine zweite Magnetfelderzeugungseinrichtung aufweist, mit welcher ein relativ zum Stator rotierendes magnetisches Multipolfeldes erzeugbar ist, wobei die zweite Magnetfelderzeugungseinrichtung zumindest eine Anordnung aus einer ersten, einer zweiten, einer dritten und einer vierten Spule umfasst, wobei die erste und die zweite Spule und die dritte und die vierte Spule jeweils im Wesentlichen konzentrisch zueinander angeordnet sind und die erste und die dritte Spule sowie die zweite und die vierte Spule seriell miteinander verschaltet sind.

## Beschreibung

Die Erfindung betrifft einen Gleichstrommotor mit einem Rotor, welcher eine erste Magnetfelderzeugungseinrichtung zur Erzeugung eines magnetischen Multipolfeldes aufweist und einen Stator, welcher eine zweite Magnetfelderzeugungseinrichtung aufweist, mit welcher ein relativ zum Stator rotierendes magnetisches Multipolfeld erzeugbar ist. Solche Gleichstrommotoren können als bürstenlose, elektronisch kommutierende Gleichstrommotoren ausgeführt und beispielsweise in Elektrowerkzeugen oder Kraftfahrzeugen insbesondere als Lenkungssystem eingesetzt werden.

### Stand der Technik

Der Stator von Gleichstrommotoren der eingangs genannten Art weist in der Regel eine Mehrzahl von Spulen oder Spulengruppen auf, welche in radialer Richtung gegenüberliegend angeordnet sind. Diese Spulen können parallel und/oder seriell miteinander verschaltet sein. Mehrere solche Spulengruppen sind um einen vorgebbaren Winkel gegeneinander verschoben angeordnet, so dass bei zyklischer Bestromung der Spulengruppen ein rotierendes magnetisches Multipolfeld erzeugt werden kann.

Dieses rotierende Multipolfeld koppelt an ein magnetisches Multipolfeld eines Rotors, wodurch dieser in Rotation versetzt wird und eine mechanische Leistung abgibt. Dabei induziert das nun ebenfalls rotierende Multipolfeld des Rotors eine Gegenspannung in den Statorspulen. Sofern der Rotor aufgrund von Fertigungstoleranzen oder Defekten nicht konzentrisch zu den Statorspulen angeordnet ist, wird nicht in allen Statorspulen die gleiche Induktionsspannung erzeugt. Aufgrund dieses Ungleichgewichts verbleibt eine NettoPotentialdifferenz, welche einen Kreisstrom in den parallel verschalteten Spulenpaaren erzeugt. Dadurch wird der Wirkungsgrad des Gleichstrommotors reduziert.

Der vorliegenden Erfindung liegt somit die Aufgabe zugrunde, den Wirkungsgrad einer bürstenlosen Gleichstrommaschine von mechanischen Toleranzen unabhängig zu machen oder zumindest deren Einfluss zu vermindern.

### Offenbarung der Erfindung

Die Aufgabe wird erfindungsgemäß durch einen Gleichstrommotor mit einem Rotor, welcher eine erste Magnetfelderzeugungseinrichtung zur Erzeugung eines magnetischen Multipolfeldes aufweist und einen Stator, welcher eine zweite Magnetfelderzeugungseinrichtung, mit welcher ein relativ zum Stator rotierendes magnetisches Multipolfeld erzeugbar ist, gelöst. Dabei enthält die zweite Magnetfelderzeugungseinrichtung zumindest eine Anordnung aus zumindest einer ersten, einer zweiten, einer dritten und einer vierten Spule, wobei die erste und die zweite Spule im Wesentlichen konzentrisch zueinander angeordnet sind und die dritte und die vierte Spule im Wesentlichen konzentrisch zueinander angeordnet sind. Weiterhin sind die erste und die dritte Spule seriell miteinander verschaltet sowie die zweite und die vierte Spule seriell verschaltet.

Erfindungsgemäß wird vorgeschlagen, ein aus dem Stand der Technik bekanntes Spulenpaar zur Erzeugung eines Dipolfeldes durch ein Spulenquartett zu ersetzen. Dabei wird für jede einzelne Spule nach dem Stand der Technik ein Spulenpaar vorgesehen, welches im Wesentlichen konzentrisch angeordnet ist. Unter einer konzentrischen Anordnung im Sinne der vorliegenden Erfindung soll dabei verstanden werden, dass die Spulen bei Bestromung ein gleichorientiertes Magnetfeld erzeugen und/oder im Wesentlichen die gleiche Fläche aufweisen und übereinander oder hintereinander angeordnet sind. Beispielsweise ergeben sich konzentrische Spulen im Sinne der Erfindung, wenn diese auf einem gemeinsamen Polschuh bzw. einem gemeinsamen Eisenkern gewickelt werden.

Jeweils zwei, im Wesentlichen konzentrisch zueinander angeordnete Spulen werden dann in einer bevorzugten Ausgestaltung der Erfindung im Stator im Wesentlichen gegenüberliegend angeordnet, so dass diese zwei gegenüberliegende Pole eines Multipolfeldes, insbesondere eines Dipolfeldes, bilden. Jeweils zwei gegenüberliegende Spulen sind dann seriell verschaltet, also die erste Spule des ersten Pols mit der ersten Spule des zweiten Pols sowie die zweite Spule des ersten Pols mit der zweiten Spule des zweiten Pols. Eine im Wesentlichen gegenüberliegende Anordnung wird dabei insbesondere dann angenommen, wenn der zwischen den Spulen eingeschlossene Winkel etwa 170° bis etwa 190°, besonders bevorzugt 180°, beträgt.

In einer bevorzugten Weiterbildung der Erfindung sind die Serienschaltung aus der ersten und der dritten Spule sowie die Serienschaltung aus der zweiten und der vierten Spule parallel miteinander verschaltet. Durch die erfindungsgemäß vorgeschlagene Verschaltung der Statorspulen wird auch bei exzentrisch laufenden Rotor in jedem Spulenpaar in etwa die gleiche Induktionsspannung induziert, so dass keine bzw. gegenüber dem Stand der Technik verringerte Ausgleichsströme zwischen den Spulen fließen. Auf diese Weise werden ohmsche Verluste durch diese Ausgleichsströme verringert und der Wirkungsgrad wunschgemäß erhöht. Eine im Wesentlichen gleiche Induktionsspannung im Sinne der Erfindung wird dabei angenommen, wenn die Differenz der Induktionsspannungen kleiner als ein vorgebbarer Grenzwert ist. Der Grenzwert ist gemäß einer bevorzugten Ausführungsform der Erfindung kleiner als 1 V, besonders bevorzugt kleiner als 0,1 V oder kleiner als 0,01 V.

Nachfolgend soll die Erfindung anhand von Ausführungsbeispielen und Figuren ohne Beschränkung des allgemeinen Erfindungsgedankens näher erläutert werden.
- Figur 1: zeigt den Aufbau eines Gleichstrommotors gemäß dem Stand der Technik.
- Figur 2: zeigt die Beschaltung der Statorspulen des in Figur 1 dargestellten Gleichstrommotors gemäß dem Stand der Technik.
- Figur 3: zeigt den Aufbau eines erfindungsgemäßen Gleichstrommotors gemäß einer ersten Ausführungsform der Erfindung.
- Figur 4: zeigt die Beschaltung der Statorspulen des Gleichstrommotors gemäß Figur 3.
- Figur 5: zeigt einen Gleichstrommotor gemäß einer zweiten Ausführungsform der Erfindung.
- Figur 6: zeigt die Beschaltung der Statorspulen des Gleichstrommotors gemäß Figur 5.
- Figur 7: zeigt eine tabellarische Übersicht über Bauformen von Gleichstrom- motoren, welche sich für die Anwendung der Erfindung eignen.
- Figur 8: zeigt die elektromagnetische Kraft auf einen exzentrisch gelagerten Rotor gemäß dem Stand der Technik.
- Figur 9: zeigt die elektromagnetische Kraft auf einen exzentrisch gelagerten Rotor gemäß der vorliegenden Erfindung.

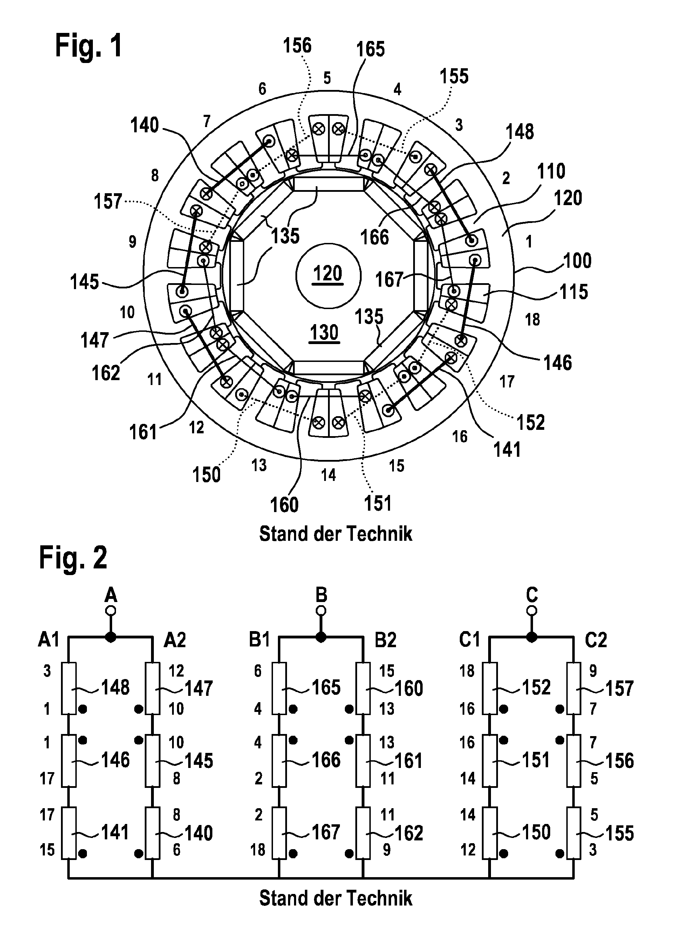

Figur 1 zeigt einen Querschnitt durch einen Gleichstrommotor gemäß dem Stand der Technik. Der Gleichstrommotor weist eine Welle 120 auf, welche drehbar gelagert ist, beispielsweise mittels Wälzlagern. Auf der Welle 120 ist ein Grundkörper 130 eines Rotors drehfest angebracht. Der Rotor kann beispielsweise aus einem Kunststoffmaterial oder einem Metall oder einer Legierung gefertigt werden. Innerhalb des Rotors sind Permanentmagnete 135 angeordnet, welche ein magnetisches Multipolfeld erzeugen. Im dargestellten Ausführungsbeispiel sind acht Permanentmagnete 135 vorgesehen. Dem Fachmann ist selbstverständlich geläufig, dass auch eine größere oder eine geringere Anzahl von Permanentmagneten verwendet werden kann.

Der Stator 100 ist konzentrisch um den Rotor 130 angeordnet. Der Stator 100 umfasst eine Mehrzahl von Polschuhen 110, welche durch Schlitze 115 voneinander getrennt sind. Im dargestellten Ausführungsbeispiel weist der Stator 18 Schlitze 115 und 18 Polschuhe 110 auf, welche fortlaufend von 1 bis 18 nummeriert sind. Die Polschuhe 110 sind über ein Joch 120 miteinander verbunden, um den magnetischen Fluss zu führen. In einer bevorzugten Ausführungsform können die Polschuhe 110 und das Joch 120 einstückig ausgeführt werden.

Weiterhin umfasst der Stator 18 Spulen mit jeweils N Windungen eines elektrischen Leiters, beispielsweise lackisoliertem Kupferdraht. Die Spulen sind dabei in drei Zweige unterteilt. Der erste Zweig A umfasst dabei die Spulen 140, 141, 145, 146, 147 und 148. Der zweite Pfad umfasst die Spulen 150, 151, 152, 155, 156 und 157. Der dritte Pfad umfasst die Spulen 160, 161, 162, 165, 166 und 167.

Die sechs Spulen eines jeden Pfades sind in zwei Gruppen unterteilt. Beispielsweise umfasst die erste Gruppe des ersten Pfades die Spulen 140, 145 und 147. Die zweite Gruppe des ersten Pfades umfasst die Spulen 141, 146 und 148. Die zwei Gruppen eines Pfades sind in etwa gegenüberliegend im Stator angeordnet. Eine gegenüberliegende Anordnung im Sinne der vorliegenden Erfindung bedeutet dabei, dass die Spulen im Wesentlichen einen Winkel von 180° einschließen. Dem Fachmann ist dabei selbstverständlich geläufig, dass aufgrund von Fertigungstoleranzen dieser Winkel geringfügig variieren kann. Entsprechend sind auch die Spulen der übrigen Pfade in zwei gegenüberliegenden Gruppen angeordnet.

Die Spulen der jeweiligen Pfade sind um jeweils 60° gegenüber den benachbarten Pfaden verdreht am Stator montiert. Auf diese Weise kann durch phasenrichtiges, zyklisches Bestromen der Spulen ein rotierendes Multipolfeld im Bereich des Rotors 130 erzeugt werden.

Figur 2 zeigt die elektrische Beschaltung des Gleichstrommotors gemäß Figur 1. Die drei Pfade A, B und C können untereinander beispielsweise als Stern oder Dreieckschaltung miteinander verbunden sein. Figur 2 zeigt beispielhaft eine Sternschaltung. Innerhalb eines Pfades sind die Spulen einer Spulengruppe seriell miteinander verschaltet. Beispielsweise sind die Spulen 140, 145 und 147 seriell miteinander verschaltet (Pfad A1) und die Spulen 141, 146 und 148 (Pfad A2). Beide Spulengruppen eines Pfades sind parallel miteinander verschaltet. Zur Verdeutlichung ist in Figur 2 jede Spule mit dem Schaltzeichen eines ohmschen Widerstandes dargestellt, wobei jeder Anschlusskontakt mit der fortlaufenden Nummer des Schlitzes 115 versehen ist, durch welchen die Spule verläuft.

Im Betrieb wird mittels einer Schalteinrichtung aus dem Versorgungsgleichstrom ein dreiphasiges Signal erzeugt. Jede Phase versorgt einen Pfad mit jeweils sechs Spulen, wobei die einzelnen Ansteuersignale der drei Pfade A, B und C phasenrichtig aufeinanderfolgen, um ein kontinuierlich rotierendes Magnetfeld im Bereich des Rotors 130 zu erzeugen. Die Schalteinrichtung kann beispielsweise mittels einer Transistorschaltung realisiert werden und ist dem Fachmann bekannt.

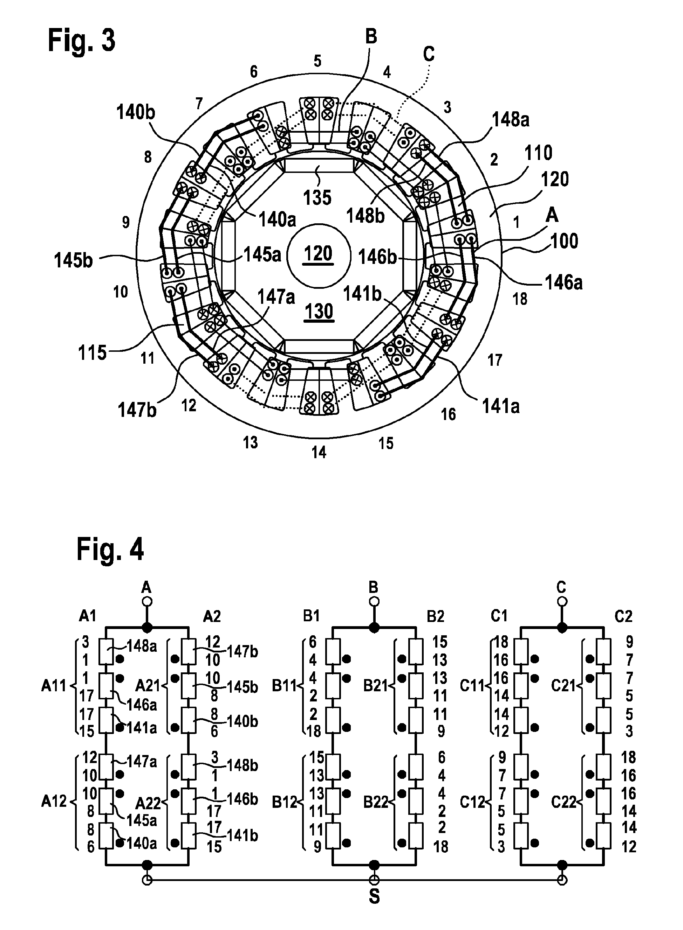

Figur 3 zeigt eine Ausführungsform eines Gleichstrommotors gemäß der vorliegenden Erfindung. Der erfindungsgemäß vorgeschlagene Gleichstrommotor weist ebenfalls eine Welle 120 auf, welche drehbar gelagert ist, beispielsweise mittels Wälzlagern. Auf der Welle 120 ist ein Grundkörper 130 eines Rotors drehfest angebracht. Der Rotor kann beispielsweise aus einem Kunststoffmaterial oder einem Metall oder einer Legierung gefertigt werden. Innerhalb des Rotors sind Permanentmagnete 135 angeordnet, welche ein magnetisches Multipolfeld erzeugen. Im dargestellten Ausführungsbeispiel sind acht Permanentmagnete 135 vorgesehen. Dem Fachmann ist selbstverständlich geläufig, dass auch eine größere oder eine geringere Anzahl von Permanentmagneten verwendet werden kann.

Der Rotor 130 ist von einem Stator 100 umgeben. Dieser weist in an sich bekannter Weise Polschuhe 110 auf, welche durch Lücken 115 voneinander getrennt sind. Die Polschuhe 110 sind durch ein Joch 120 miteinander verbunden. Auch im dargestellten Ausführungsbeispiel gemäß Figur 3 weist der Gleichstrommotor 18 Polschuhe 110 bzw. 18 Spalten 115 auf, welche fortlaufend nummeriert sind. Dem Fachmann ist selbstverständlich geläufig, dass auch eine größere oder eine geringere Anzahl von Polschuhen verwendet werden kann. Zur Verdeutlichung des grundlegenden Prinzips der Erfindung wird diese jedoch anhand eines Ausführungsbeispiels erläutert, welches die selbe Geometrie verwendet, wie der in Figur 1 beschriebene Gleichstrommotor gemäß dem Stand der Technik.

Wie anhand des ersten Pfades mit sechs Spulen 140, 141, 145, 146, 147 und 148 erläutert, besteht das Grundprinzip der Erfindung darin, statt einer Spule 140 mit N Wicklungen zwei Teilspulen 140a und 140b einzusetzen, welche jeweils N/2 Wicklungen aufweisen. In gleicher Weise werden auch die übrigen Spulen 141, 145, 146, 147, 148, 150, 151, 152, 155, 156, 157, 160, 161, 162, 165, 166 und 167 in zwei Teilspulen 141a, 145a, 146a, 147a, 148a, 150a, 151a, 152a, 155a, 156a, 157a, 160a, 161a, 162a, 165a, 166a, 167a, 141b, 145b, 146b, 147b, 148b, 150b, 151 b, 152b, 155b, 156b, 157b, 160b, 161 b, 162b, 165b, 166b und 167b mit jeweils halber Wicklungszahl unterteilt. Aus Gründen der Übersichtlichkeit sind jedoch nicht alle Bezugszeichen für alle Teilspulen in Figur 3 eingetragen.

Durch die erfindungsgemäß vorgeschlagene Maßnahme weist der Gleichstrommotor gemäß Figur 3 doppelt so viele Spulen wie ein vergleichbarer Gleichstrommotor gemäß dem Stand der Technik auf. Da jede einzelne Spule jedoch nur die halbe Windungszahl aufweist, bleibt die Anzahl der gesamten im Stator eingesetzten Windungen und damit die Stärke des vom Stator erzeugbaren Magnetfeldes unverändert. Somit weist der Gleichstrommotor gemäß der vorliegenden Erfindung ein im Vergleich zum Stand der Technik unverändertes nutzbares Drehmoment auf.

Auch die 36 Spulen gemäß der vorliegenden Erfindung sind in drei Pfade mit jeweils zwei Spulengruppen unterteilt. Aufgrund der Halbierung der Windungszahl weist jedoch jede Spulengruppe sechs Spulen auf. Die zwei Spulengruppen eines jeden Pfades sind wiederum gegenüberliegend angeordnet.

Figur 4 illustriert die elektrische Beschaltung der 36 Spulen eines Stators gemäß Figur 3. In Figur 4 ist wiederum jede Spule als Rechteck mit zwei Anschlusskontakten dargestellt, wobei die Anschlusskontakte wiederum die fortlaufende Nummer des jeweiligen Spaltes 115 tragen, durch welche die Spule verläuft. Jeweils 12 Spulen bilden einen Pfad A, B und C, welche untereinander beispielsweise als Stern oder Dreieckschaltung miteinander verbunden sind. Figur 4 zeigt beispielhaft eine Sternschaltung. Die Pfade werden wie vorstehend beschrieben durch eine zugehörige Schalteinrichtung sequentiell bestromt, um auf diese Weise ein rotierendes Magnetfeld im Inneren des Stators 100 bereitzustellen.

Jeder Pfad A, B und C besteht aus jeweils zwei parallel verschalteten Teilpfaden A1, A2, B1, B2, C1 und C2. Jeder Teilpfad umfasst sechs seriell verschaltete Spulen, wie beispielhaft anhand des Teilpfades A1 erläutert wird. Dieser umfasst die Spulen 148a, 146a und 141 a der zweiten Spulengruppe des ersten Pfades sowie die Spulen 147a, 145a und 140a der ersten Spulengruppe des ersten Pfades. Der Teilpfad A1 umfasst somit sechs Spulen, von denen sich jeweils drei gegenüberstehen. In gleicher Weise bilden die Spulen 147b, 145b, 140b, 148b, 146b und 141 b den zweiten Teilpfad A2.

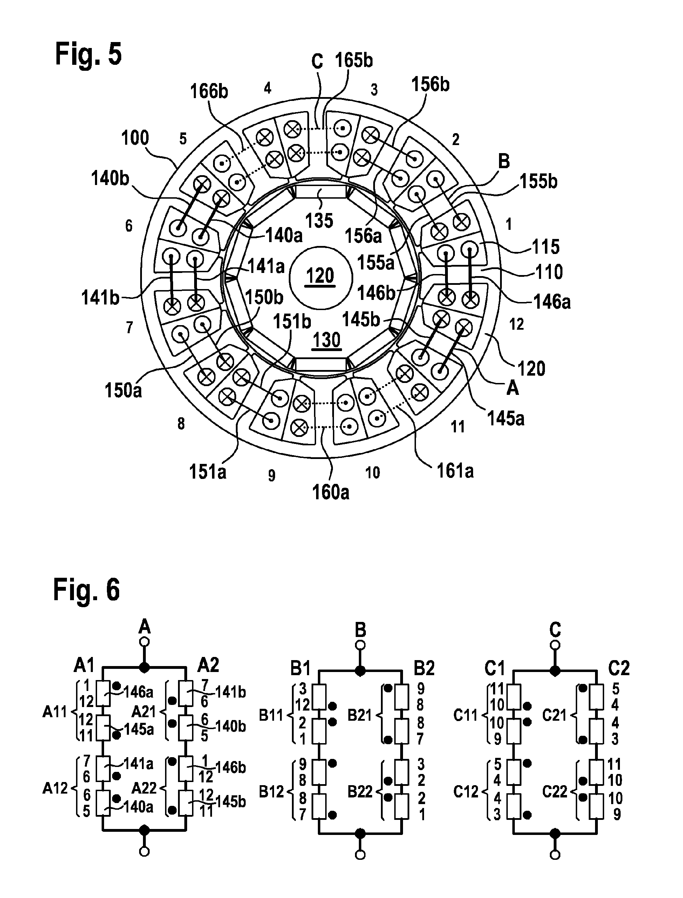

Figur 5 zeigt ein weiteres Ausführungsbeispiel der vorliegenden Erfindung. Auch der Gleichstrommotor gemäß Figur 5 weist einen Rotor 130 mit einer Welle 120 und Permanentmagneten 135 auf, wie im Zusammenhang mit Figur 1 und Figur 3 beschrieben. Der Rotor 130 gemäß Figur 5 weist jedoch zehn Permanentmagnete 135 zur Erzeugung eines ersten magnetischen Multipolfeldes auf.

Auch der Gleichstrommotor gemäß Figur 5 weist einen Stator 100 auf, welcher 12 Polschuhe 110 mit 12 dazwischen angeordneten Spalten 115 aufweist. Die Polschuhe sind ebenfalls über ein rückwärtiges Joch 120 miteinander verbunden. Auch die Spalte 115 gemäß Figur 5 sind fortlaufend von 1 bis 12 nummeriert.

Der Gleichstrommotor gemäß Figur 5 weist 24 Spulen 140a, 140b, 141 a, 141 b, 145a, 145b, 146a, 146b, 150a, 150b, 151a, 151b, 155a, 155b, 156a, 156b, 160a, 160b, 161 a, 161 b, 165a, 165b, 166a, 166b auf. Die 24 Spulen sind dabei wiederum in drei Pfade A, B und C eingeteilt. Jeder Pfad umfasst somit acht Spulen, welche in zwei Spulengruppen angeordnet sind, welche sich auf der Umfangsfläche des Stators 100 gegenüber stehen.

Figur 6 zeigt wiederum die prinzipielle Verschaltung der 24 Spulen des Gleichstrommotors gemäß Figur 5. Beispielhaft sei dabei wieder der erste Teilpfad A1 des ersten Pfades A erläutert. Dieser umfasst die Spulen 146a, 145a, 141a und 140a. Somit umfasst der erste Teilpfad A1 wieder Spulen aus beiden sich gegenüberstehenden Spulengruppen, wie in Zusammenhang mit Figur 4 bereits erläutert. In gleicher Weise bilden die Spulen 146b, 145b, 140b und 141 b den zweiten Teilpfad A2. In der selben Weise sind auch die weiteren Pfade B und C gebildet.

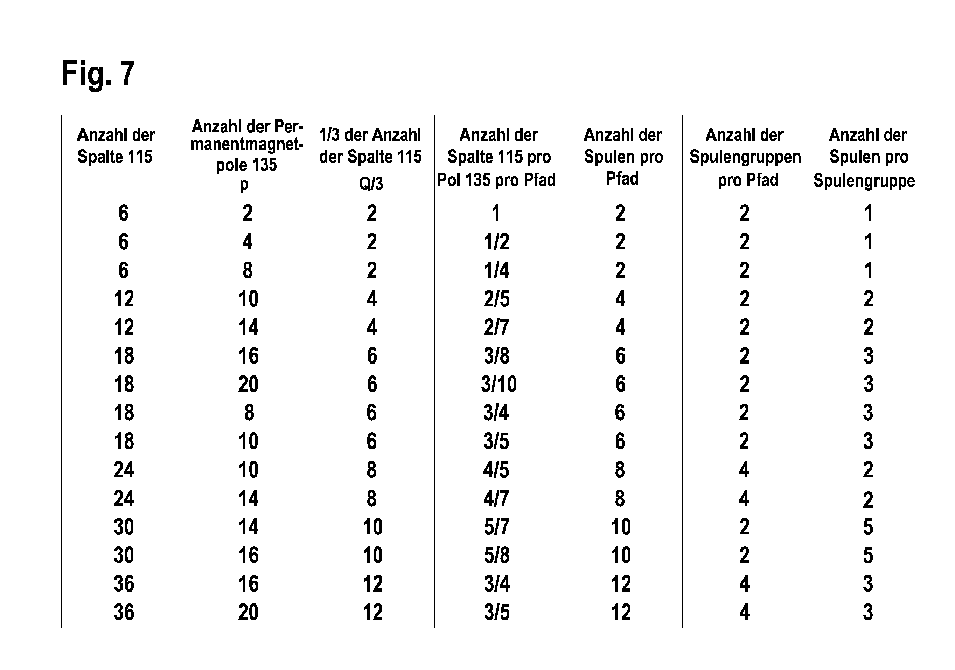

Dem Fachmann ist dabei selbstverständlich geläufig, dass die Anzahl der Spalte 115, die Anzahl der Polschuhe 110, die Anzahl der Pfade A, B und C, die Anzahl der Spulen pro Pfad, die Anzahl der Spulengruppen pro Pfad und die Anzahl der Spulen pro Spulengruppe nicht auf die in den Figuren 3 und 5 dargestellten Ausführungsbeispiele beschränkt ist. Weitere Ausführungsbeispiele sind tabellarisch in der Übersicht gemäß Figur 7 dargestellt. Auch diese Tabelle ist jedoch nicht vollständig und daher als nicht abschließend anzusehen. Die Tabelle gemäß Figur 7 zeigt nur Gleichstrommotoren mit drei Phasen, obgleich die Erfindung auch bei Gleichstrommaschinen mit einer anderen Anzahl von Phasen verwendbar ist. Weiterhin muss darauf hingewiesen werden, dass geradzahlige Vielfache aller Spalt und Polschuhkombinationen gemäß Figur 7 ebenso verwendet werden können. In einigen Fällen können auch ungerade Vielfache der angegebenen Kombinationen zur Verwirklichung der Erfindung eingesetzt werden.

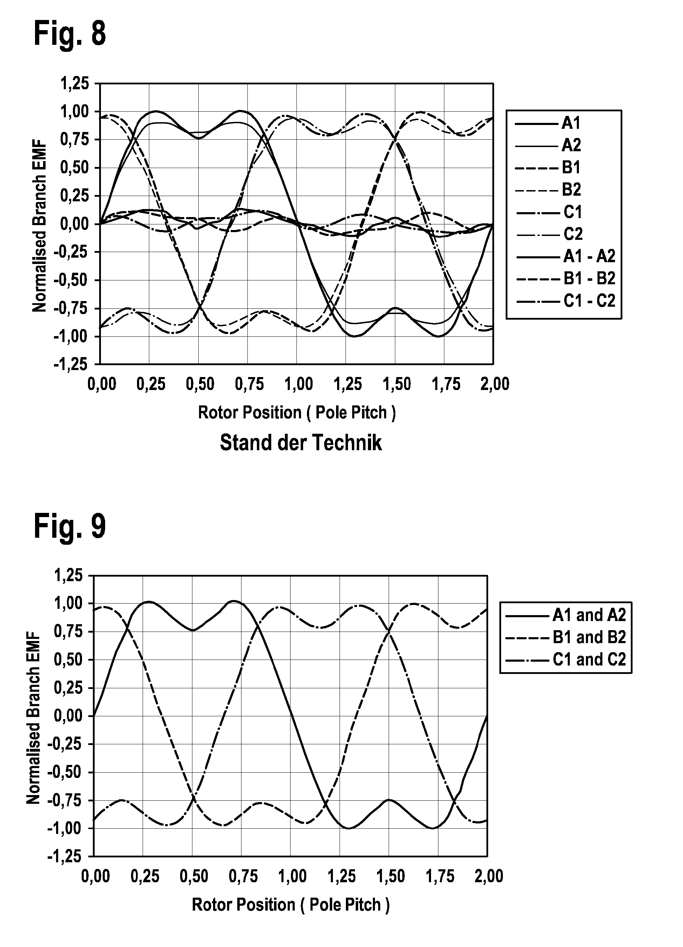

Figur 8 und 9 verdeutlichen die Wirkung der vorliegenden Erfindung. Die Figuren zeigen die normierte elektromagnetische Kraft, welche in jedem der sechs Teilpfade A1, A2, B1, B2, C1 und C2 induziert wird, wenn der Rotor 130 um einen Winkel von zwei Permanentmagnetpolen 135 gedreht wird. Beim Ausführungsbeispiel gemäß Figur 3 entspricht dies einer Drehung um 90°. Bei der in Figur 5 dargestellten Ausführungsform entspricht dies einer Drehung um 72°.

Sofern der Rotor konzentrisch zum Stator angeordnet ist, ist die durch jeden Teilpfad A1 und A2 oder B1 und B2 oder C1 und C2 auf den Rotor 130 ausgeübte Kraft und die vom Magnetfeld des Rotors in die Spulen induzierte Spannung identisch.

Sofern der Rotor nicht konzentrisch zum Stator angeordnet ist, ergibt sich bei einem Gleichstrommotor gemäß dem Stand der Technik der in Figur 8 dargestellte Verlauf der normierten elektromagnetischen Kräfte. Ein nicht konzentrisch im Stator laufender Rotor kann dabei entweder eine statische Exzentrizität aufweisen oder eine dynamische Exzentrizität. Im ersten Fall ist der Rotor 130 rotationssymmetrisch zur Achse 120 angeordnet. Die Achse 120 ist jedoch nicht im Mittelpunkt des Stators 100 positioniert. Eine dynamische Exzentrizität ergibt sich dann, wenn die Achse 120 konzentrisch zum Stator angeordnet ist, der Rotor 130 jedoch nicht konzentrisch auf der Achse 120 läuft.

Wie aus Figur 8 ersichtlich ist, erzeugt jeder Teilpfad A1, A2, B1, B2, C1 und C2 eine unterschiedliche elektromagnetische Kraft auf den Rotor 130. Damit geht eine unterschiedliche Induktionsspannung einher. Weiterhin zeigt Figur 8 die Differenzen zwischen beiden Teilpfaden eines Pfades, also die Differenz A1A2, B1B2 und C1C2. Diese Differenzen repräsentieren eine Potentialdifferenz zwischen den beiden Teilpfaden eines jeden Pfades A, B und C. Eine solche Potentialdifferenz bewirkt einen Kreisstrom innerhalb eines jeden Pfades, welcher den Wirkungsgrad des Gleichstrommotors reduziert. Weiterhin wird das Drehmoment des Gleichstrommotors durch die unterschiedlichen elektromagnetischen Kräfte ungleichmäßig abgegeben, so dass der Gleichstrommotor verstärkte Vibrationen aufweist.

Im Gegensatz dazu zeigt Figur 9 die normierten elektromagnetischen Kräfte eines erfindungsgemäßen Gleichstrommotors gemäß den Figuren 3 und 5. Aus Figur 9 ist deutlich ersichtlich, dass in den Teilpfaden A1 und A2 ebenso wie in den Teilpfaden B1 und B2 sowie den Teilpfaden C1 und C2 jeweils die selbe elektromagnetische Kraft wirkt. Somit ist die Differenz dieser Werte 0. Somit führt der erfindungsgemäß vorgeschlagene Aufbau eines Gleichstrommotors zu einer gleichmäßigen Drehmomentabgabe und damit einem ruhigeren Motorlauf.

Weiterhin tritt zwischen den einzelnen Teilpfaden eines Strompfades keine Potentialdifferenz auf, so dass kein Ausgleichsstrom durch den Strompfad fließt. Dadurch wird die Gesamtstromstärke und damit die ohmschen Verluste des Gleichstrommotors vermindert. Dadurch steigt der Wirkungsgrad wunschgemäß an.

## Patentansprüche

1. Gleichstrommotor mit
einem Rotor, welcher eine erste Magnetfelderzeugungseinrichtung zur Erzeugung eines magnetischen Multipolfeldes aufweist und
einem Stator, welcher eine zweite Magnetfelderzeugungseinrichtung aufweist, mit welcher ein relativ zum Stator rotierendes magnetisches Multipolfeld erzeugbar ist, **dadurch gekennzeichnet, dass** die zweite Magnetfelderzeugungseinrichtung zumindest eine Anordnung aus einer ersten, einer zweiten, einer dritten und einer vierten Spule umfasst, wobei die erste und die zweite Spule sowie die dritte und die vierte Spule jeweils im Wesentlichen konzentrisch zueinander angeordnet sind und die erste und die dritte Spule seriell miteinander verschaltet sind sowie die zweite und die vierte Spule seriell miteinander verschaltet sind.

2. Gleichstrommotor nach Anspruch 1, **dadurch gekennzeichnet, dass** die erste und die zweite Spule sowie die dritte und die vierte Spule jeweils auf einem gemeinsamen Polschuh angeordnet sind.

3. Gleichstrommotor nach Anspruch 2, **dadurch gekennzeichnet, dass** die erste und die zweite Spule sowie die dritte und die vierte Spule im Wesentlichen gegenüberliegend angeordnet sind.

4. Gleichstrommotor nach einem der Ansprüche 1 oder 3, **dadurch gekennzeichnet, dass** die Serienschaltung aus der ersten und der dritten Spule sowie die Serienschaltung aus der zweiten und der vierten Spule parallel miteinander verschaltet sind.

5. Gleichstrommotor nach Anspruch 4, **dadurch gekennzeichnet, dass** bei dessen Betrieb über die Serienschaltung aus der ersten und der dritten Spule sowie über die Serienschaltung aus der zweiten und der vierten Spule in etwa die gleiche Spannung abfällt.

6. Gleichstrommotor nach einem der Ansprüche 1 bis 5, **dadurch gekennzeichnet, dass** eine Mehrzahl von Anordnungen aus einer ersten, einer zweiten, einer dritten und einer vierten Spule zu einer Spulengruppe zusammengefasst ist.

7. Gleichstrommotor nach Anspruch 6, **dadurch gekennzeichnet, dass** jeweils die ersten Spulen, die zweiten Spulen, die dritten Spulen und die vierten Spulen der Anordnungen seriell miteinander verschaltet sind.

8. Gleichstrommotor nach einem der Ansprüche 1 bis 7, **dadurch gekennzeichnet, dass** dieser eine Mehrzahl von Anordnungen aus einer ersten, einer zweiten, einer dritten und einer vierten Spule oder eine Mehrzahl von Spulengruppen aufweist sowie eine Einrichtung, mit welcher diese zyklisch mit einem elektrischen Strom beaufschlagbar sind.

9. Elektrowerkzeug mit einem Gleichstrommotor nach einem der Ansprüche 1 bis 8.

10. Lenkungssystem eines Kraftfahrzeuges mit einem Gleichstrommotor nach einem der Ansprüche 1 bis 8.
